# EUROPÄISCHE PATENTANMELDUNG

(11) **EP 0 653 299 A1**
(43) Veröffentlichungstag der Anmeldung: **17.05.1995**
(21) Anmeldenummer: 94117672.9
(22) Anmeldetag: 09.11.1994
(51) Int. Cl.: B32B 29/04, B32B 27/04

(54) **Schichtpressstoffplatte**

(30) Priorität: 13.11.1993 DE 9317406 U; 08.03.1994 DE 4407620
(71) Anmelder: Resopal GmbH, D-64818 Gross-Umstadt (DE)
(72) Erfinder: Holzer, Herbert Dr., D-64823 Gross-Umstadt (DE)
(74) Vertreter: Katscher, Helmut, Dipl.-Ing.

(57) **Zusammenfassung**

Eine Schichtpreßstoffplatte (1)weist einen Kern (3) aus einem Stapel von mit Phenol-Formaldehydharz imprägnierten Kernpapieren (2) und mindestens ein mit Melamin-Formaldehydharz getränktes Deckpapier(4) auf, die miteinander unter Druck und Hitze verpreßt sind. Der Kern (3) hat eine Zwischenschicht (5) aus hochreißfestem Gewebe, die beidseitig mit den benachbarten Kernpapieren (2) durch eine chemische Reaktion verbunden ist. Die Zwischenschicht (5) ist beidseitig mit thermoplastischem Polyäther-Polyurethan oder Polyester-Polyurethan beschichtet.

## Beschreibung

Die Erfindung betrifft eine Schichtpreßstoffplatte mit einem Kern aus einem Stapel von mit Phenol-Formaldehydharz imprägnierten Kernpapieren und mindestens einem mit Melamin-Formaldehydharz getränkten Deckpapier, die miteinander unter Druck und Hitze verpreßt sind.

Derartige Schichtpreßstoffplatten (HPL) werden insbesondere als dekorative Schichtpreßstoffplatten (EN 438) ausgeführt, wobei das Deckpapier ein Dekorpapier ist und wobei ggf. noch ein Overlaypapier verwendet wird. Das Deckpapier kann einseitig oder auf beiden Seiten der Schichtpreßstoffplatte vorgesehen werden. Der Stapel von harzgetränkten Papieren wird üblicherweise bei Temperaturen von über 120°C und Drücken von 70-100 hP verpreßt.

Diese dekorativen Schichtpreßstoffplatten werden in großem Umfang und für sehr unterschiedliche Anwendungen eingesetzt. Neben Anwendungsfällen, in denen die Schichtpreßstoffplatten mit einem Träger verklebt werden und dadurch eine besondere mechanische Festigkeit erhalten, wodurch ein Zersplittern bei starker Stoßbeanspruchung verhindert wird, werden die Schichtpreßstoffplatten in vielen Fällen auch ohne einen solchen Träger oder mit einem nur geringe mechanische Festigkeit aufweisenden Träger verarbeitet. Bei starker Stoßbeanspruchung besteht dann die Gefahr, daß die Schichtpreßstoffplatten zersplittern. Diese Eigenschaft zeigen vor allem dünne Schichtpreßstoffplatten in Dicken zwischen 0,8 und 6 mm. Beim Einsatz in Fahrzeugen, zum Beispiel bei Tischplatten in Caravans, Türen und Abtrennungen in Bussen und Waggons wird eine Leichtbauweise bevorzugt, bei der dünne Schichtpreßstoffplatten von beispielsweise 1,2 mm Dicke auf einen Träger mit Wabenstruktur aufgeklebt werden. Bei starker Schlag- und Stoßbeanspruchung kann die Schichtpreßstoffplatte durchschlagen werden; die scharfkantigen Bruchstücke können zu Schnittverletzungen führen.

Aufgabe der Erfindung ist es daher, eine Schichtpreßstoffplatte der eingangs genannten Gattung zu schaffen, die auch bei hoher Schlag- bzw. Stoßbeanspruchung nicht splittert und deshalb auch bei Beschädigung oder Zerstörung keine scharfkantigen Bruchstücke aufweist.

Diese Aufgabe wird erfindungsgemäß dadurch gelöst, daß der Kern eine Zwischenschicht aus eine hochreißfesten Gewebe aufweist, die beidseitig mit den benachbarten Kernpapieren durch eine chemische Reaktion verbunden ist.

Die Zwischenschicht aus hochreißfestem Gewebe hat ausgezeichnete mechanische Festigkeitswerte. Die intensive Verbindung mit den benachbarten Kernpapieren führt dazu, daß die Schichtpreßstoffplatte auch bei mechanischer Beschädigung bzw. Zerstörung durch Stoß oder Schlag ihren Verbund beibehält, d.h. es entstehen keine scharfkantigen Bruchstücke, sondern nur Bruchfalten, an denen die benachbarten Teile der Schichtpreßstoffplatte ihren Zusammenhalt jedoch beibehalten. Damit besteht keine Gefahr von Schnittverletzungen. Die so ausgeführten Schichtpreßstoffplatten sind deshalb für die Anwendung in Fahrzeugen besonders geeignet.

Vorzugsweise ist das hochreißfeste Gewebe ein Polyestergewebe oder ein Glasfasergewebe.

Vorzugsweise ist die Zwischenschicht beidseitig mit thermoplastischem Polyäther-Polyurethan oder Polyester-Polyurethan beschichtet.

Diese Beschichtung führt zu einem hervorragenden Verbund der aus Gewebe bestehenden Zwischenschicht mit dem Phenol-Formaldehydharz der jeweils benachbarten Kernpapiere. Die Wirkung der aus Polyestergewebe oder Glasfasergewebe bestehenden Zwischenschicht, die zu einer Erhöhung der mechanischen Festigkeit der Schichtpreßstoffplatte führt, wird durch die Elastizität und Zähigkeit der thermoplastischen und reaktiven Beschichtungsmasse noch besonders verbessert. Durch die Verbindung der Gewebe-Zwischenschicht mit den benachbarten Kernpapieren über die thermoplastische Beschichtungsmasse wird ein Verbund erreicht, der unter allen auftretenden Einflüssen, wie Schlag oder Stoß, ein Zersplittern der Schichtpreßstoffplatte wirksam verhindert.

Die Verwendung von Glasfasergewebe hat den Vorteil, daß es feuerhemmend ist. Gemäß einer Ausgestaltung des Erfindungsgedankens ist vorgesehen, daß das die Beschichtung bildende Polyurethan durch flammhemmende Zusätze schwerentflammbar eingestellt ist. Beide Maßnahmen dienen dazu, den Feuerwiderstand der Schichtpreßstoffplatte zu erhöhen.

Gemäß einer weiteren Ausgestaltung des Erfindungsgedankens ist vorgesehen, daß das die Zwischenschicht bildende hochreißfeste Gewebe ein Polyamidgewebe ist. Dieses Polyamidgewebe verbindet sich auch ohne Polyurethanbeschichtung durch eine chemische Reaktion mit den benachbarten Kernpapieren.

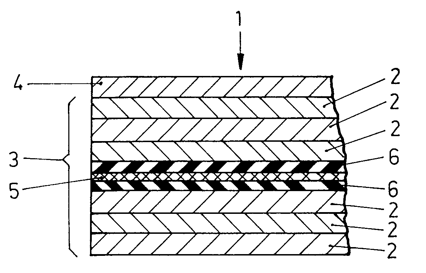

Nachfolgend wird ein Ausführungsbeispiel der Erfindung näher erläutert, das in der Zeichnung dargestellt ist.

Die Zeichnung zeigt in einem vergrößerten Teilschnitt eine dekorative Schichtpreßstoffplatte 1. Mehrere, zu einem Stapel zusammengelegte Kernpapiere 2, die mit Phenol-Formaldehydharz imprägniert sind, bilden einen Kern 3 der Schichtpreßstoffplatte 1.

Auf den Kern 3 ist ein mit Melamin-Formaldehydharz getränktes Deckpapier 4 aufgelegt, das beim dargestellten Ausführungsbeispiel ein Dekorpapier ist. Zusätzlich kann ein ebenfalls harzimprägniertes Overlaypapier (nicht dargestellt) vorgesehen werden.

In den Kern 3 ist eine Zwischenschicht 5 aus Polyestergewebe oder Glasfasergewebe eingelegt. Die Zwischenschicht 5 ist beidseitig mit einer thermoplastischen und reaktiven Beschichtung 6 versehen, die aus Polyäther-Polyurethan oder Polyester-Polyurethan besteht. Das die Beschichtung 6 bildende Polyurethan kann durch flammhemmende Zusätze schwerentflammbar eingestellt sein. Dadurch erhält man einen erhöhten Feuerwiderstand der Schichtpreßstoffplatte 1.

Alle Schichten der Schichtpreßstoffplatte sind bei einer Temperatur von mehr als 120°C und einem Druck von 70-100 hP miteinander verpreßt. Dadurch entsteht ein hochfester Verbund zwischen allen Schichten, insbesondere auch zwischen der Gewebe-Zwischenschicht 5 und den benachbarten Kernpapieren 2, weil die aus Polyurethan bestehenden Beschichtungen 6 einen hervorragenden Verbund mit dem Phenol-Formaldehyharz der Kernpapiere 2 eingehen.

Abweichend von der beschriebenen Ausführungsform, bei der die Zwischenschicht 5 aus Polyestergewebe oder Glasfasergewebe besteht, kann als hochreißfestes Gewebe für die Zwischenschicht 5 auch ein Polyamidgewebe verwendet werden. In diesem Fall kann auf die Polyurethanbeschichtungen 6 verzichtet werden, weil das Polyamidgewebe unmittelbar eine chemische Verbindung mit den benachbarten Kernpapieren 2 eingeht.

Die so hergestellte dekorative Schichtpreßstoffplatte hat gegenüber herkömmlichen dekorativen Schichtpreßstoffplatten eine erhöhte Festigkeit und zeigt insbesondere bei Beschädigung oder Zerstörung durch Schlag oder Stoß ein wesentlich günstigeres Verhalten, weil auch die beschädigte, zerbrochene Schichtpreßstoffplatte keine offenen Schnittkanten oder Splitter aufweist, die zu Verletzungen führen könnten.

## Patentansprüche

1. Schichtpreßstoffplatte (1) mit einem Kern (3) aus einem Stapel von mit Phenol-Formaldehydharz imprägnierten Kernpapieren (2) und mindestens einem mit Melamin-Formaldehydharz getränkten Deckpapier (4), die miteinander unter Druck und Hitze verpreßt sind, dadurch gekennzeichnet, daß der Kern (3) eine Zwischenschicht (5) aus hochreißfestem Gewebe aufweist, die beidseitig mit den benachbarten Kernpapieren (2) durch eine chemische Reaktion verbunden ist.

2. Schichtpreßstoffplatte nach Anspruch 1, dadurch gekennzeichnet, daß das hochreißfeste Gewebe ein Polyestergewebe ist.

3. Schichtpreßstoffplatte nach Anspruch 1, dadurch gekennzeichnet, daß das hochreißfeste Gewebe ein Polyamidgewebe ist.

4. Schichtpreßstoffplatte nach Anspruch 1, dadurch gekennzeichnet, daß das hochreißfeste Gewebe ein Glasfasergewebe ist.

5. Schichtpreßstoffplatte nach Anspruch 1, dadurch gekennzeichnet, daß die Zwischenschicht (5) beidseitig mit thermoplastischem Polyäther-Polyurethan oder Polyester-Polyurethan beschichtet ist.

6. Schichtpreßstoffplatte nach Anspruch 5, dadurch gekennzeichnet, daß das die Beschichtung bildende Polyurethan durch flammhemmende Zusätze schwerentflammbar eingestellt ist.
